# EUROPEAN PATENT APPLICATION

(11) **EP 1 601 077 A1**
(43) Date of publication of application: **30.11.2005**
(21) Application number: 04012496.8
(22) Date of filing: 26.05.2004
(51) Int. Cl.: H02J 7/14, B62J 6/00

(54) **Power storage and management system for a bicycle dynamo**

(71) Applicant: Lee Chi Enterprises Company Ltd., Chang Hwa City (TW)
(72) Inventor: You Mau Chi, Taichung County, Taiwan (TW); Jiang Chang Cheng, Taichung County, Taiwan (TW); Jou Bo Yi, Changhua County, Taiwan (TW)
(74) Representative: Wehnert, Werner

(57) **Abstract**

The present invention relates to a power storage and management system for a bicycle dynamo, which is particularly used to prevent the headlight and the rear light of a bicycle from being damaged at a high speed. Besides, the power storage and management system for a bicycle can be used to store the surplus electric energy of the bicycle dynamo, so as to keep the headlight and the rear light lighting at a desired brightness when the bicycle runs at low speed.

## Description

### BACKGROUND OF THE INVENTION

### Field of the Invention

The present invention relates to a bicycle dynamo system, and more particularly to a power storage and management system for a bicycle dynamo.

### Description of the Prior Arts

A bicycle dynamo is normally actuated to generate voltage by wheel rotation of a bicycle, and the voltage can turn on headlight and rear light of the bicycle, so as to enable the user ride safely at night. However, there are still some disadvantages will be caused in real operation and need to be improved as follows:

First, since the brightness of the headlight and the rear light is determined by and directly proportional to the speed of the bicycle, in this case, when speed of the bicycle is too high, the voltage generated by the bicycle dynamo will probably be higher than the limit voltage value of the headlight and the rear light, so the light will be damaged. In addition, when the speed of the bicycle is too slow, the voltage generated by the bicycle dynamo will probably be lower than the limit voltage value of the headlight and the rear light, thus the light will be too weak.

Second, since the bicycle equipped with dynamo is an energy-consumption device, and the electric energy generated by the dynamo during the movement of the bicycle cannot be stored up, in this case, the headlight and the rear light cannot keep lighting when the bicycle is stopped.

The present invention has arisen to mitigate and/or obviate the afore-described disadvantages of the conventional bicycle dynamo.

### SUMMARY OF THE INVENTION

The primary object of the present invention is to provide a power storage and management system for a bicycle dynamo, which is particularly used to prevent the headlight and the rear light of a bicycle from being damaged at high speed.

The secondary object of the present invention is to provide a power storage and management system for a bicycle dynamo, which is used to store the surplus electric energy of the bicycle dynamo, so as to keep the headlight and the rear light lighting at a desired brightness when the bicycle runs at low speed.

The present invention will become more obvious from the following description when taken in connection with the accompanying drawings, which shows, for purpose of illustrations only, the preferred embodiments in accordance with the present invention.

### BRIEF DESCRIPTION OF THE DRAWINGS

Fig. 1 is a block diagram to show a power storage and management system for a bicycle dynamo in accordance with a first embodiment of the present invention;
Fig. 2 is a operational flow diagram to show a power storage and management system for a bicycle dynamo in accordance with a first embodiment of the present invention;
Fig. 3 is a block diagram to show a power storage and management system for a bicycle dynamo in accordance with a second embodiment of the present invention.

### DETAILED DESCRIPTION OF THE PREFERRED EMBODIMENTS

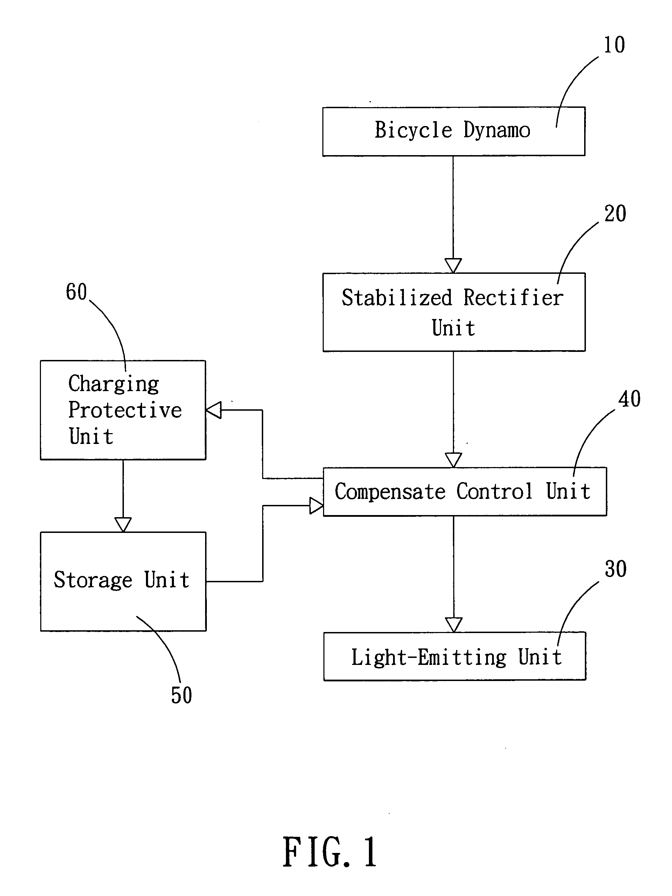

Referring to Fig. 1, a power storage and management system for a bicycle dynamo is shown, which is electrically connected to a bicycle dynamo 10 and used as a power supply, such as for a light-emitting unit 30. The power storage and management system includes a stabilized rectifier 20, a compensate control unit 40, a storage unit 50 and a charging protective unit 60.

The bicycle dynamo 10 is mounted to a bicycle, which serves to transform kinetic energy into electric energy while the user is riding the bicycle, and output a voltage that is directly proportional to the speed of the bicycle.

The stabilized rectifier 20 is electrically connected to the bicycle dynamo 10 and serves to stabilize and rectify the output voltage of the bicycle dynamo 10 and limit the peak value of the output voltage. The output voltage is provided for the light-emitting unit 30 which can be headlight or rear light of a bicycle.

The compensate control unit 40 is electrically connected to and disposed between the stabilized rectifier 20 and the lighting-emitting unit 30, which is able to detect the value of the voltage after it is stabilized and rectified by the stabilized rectifier 20.

The storage unit 50 is electrically connected to the compensate control unit 40 and used to store the electric energy after being stabilized and rectified by the stabilized rectifier 20.

The charging protective unit 60 is electrically connected to and arranged between the compensate control unit 40 and the storage unit 50 for preventing overcharge of the storage unit 50.

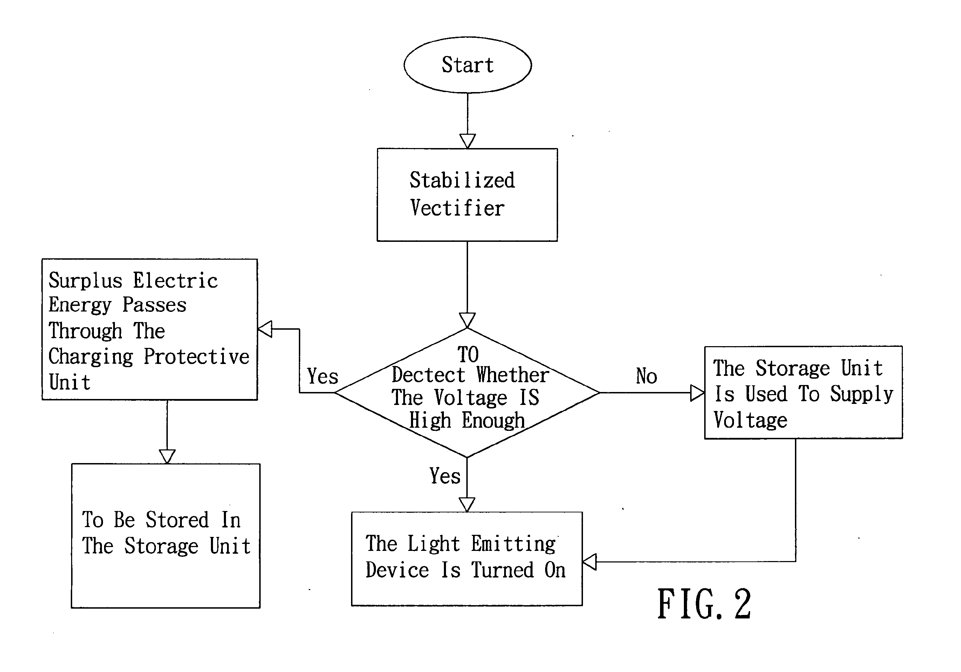

Referring further to Figs. 1 and 2, which show the operational status of the power storage and management system for a bicycle dynamo in accordance with the present invention. When a voltage is generated, it will be stabilized and rectified by the stabilized rectifier 20 and detected by the compensate control unit 40. If the detected voltage is not high enough to make the light-emitting unit 30 generate lights at a predetermined brightness level, the compensate control unit 40 will control the storage unit 50 and instruct it to supply voltage, such that the light-emitting unit 30 can generate lights at a predetermined brightness. If the voltage is high enough to make the light-emitting unit 30 generate lights at a predetermined brightness, it will also be detected and controlled by the compensate control unit 40 and the surplus electric energy, via the charging protective unit, will be stored in the storage unit 50 as reserve energy.

In addition, the present invention has as least the following functions and advantages:

First, when the dynamo generates voltage during movement of the bicycle, via the stabilized rectifier, the output voltage will be stable and the peak value of the output voltage will be limited. Thus, the light-emitting unit can be prevented from being damaged by over high voltage.

Second, the voltage generated by the bicycle dynamo is transmitted to the light-emitting unit, and the surplus electric energy, via the charging protective unit, will be stored in the storage unit. Besides, the storage unit can be prevented from overcharging since it is electrically connected to a charging protective unit.

Third, when the voltage value is not high enough after being stabilized and rectified by the stabilized rectifier, because the speed of the bicycle is too slow or stopped, which will be detected by the compensate control unit. At this moment, the compensate control unit will instruct the storage unit to supply voltage, so as to enable the light-emitting unit to generate lights at a desired brightness.

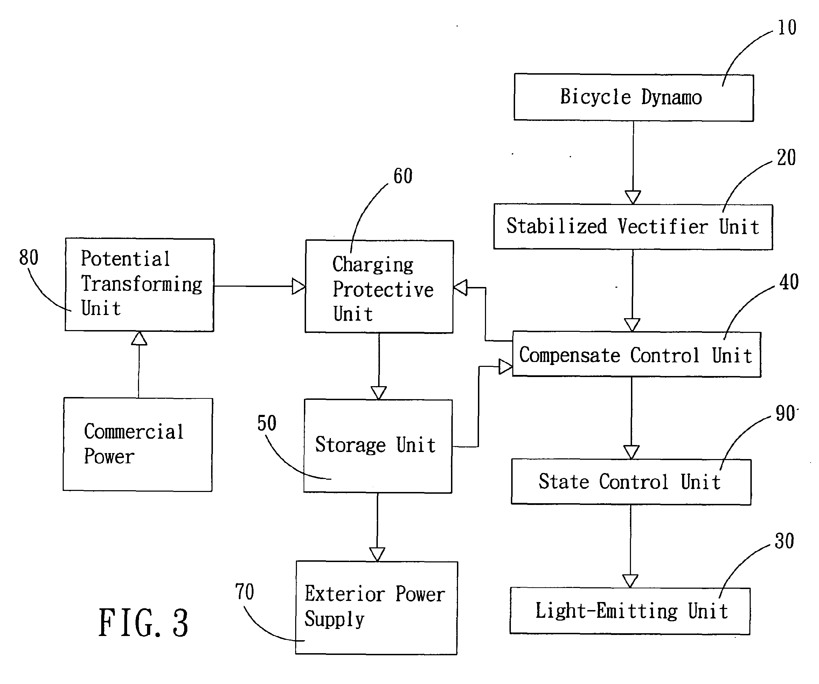

Referring to Fig. 3, a power storage and management system for a bicycle dynamo in accordance with a second embodiment of the present invention is shown, which is electrically connected to a bicycle dynamo 10 and used as a power supply, such as for a light-emitting unit 30. The power storage and management system includes a stabilized rectifier 20, a compensate control unit 40, a storage unit 50 and a charging protective unit 60. Since assembly manner and function of the bicycle dynamo in accordance with the second embodiment are identical to that of the first embodiment, further remarks would be omitted here, while the differences would be explained as follows:

The storage unit 50 can be electrically connected to an exterior power supply 70 that can be in form of output socket, such that it can be exteriorly connected with electric devices, such as radio, speaker and the likes, and thus the electric energy in the storage unit 50 can be used directly.

The charging protective unit 60 can be electrically connected to a potential transforming unit 80, so as to charge the storage unit 50 via an exterior power supply (commercial power).

A state control unit 90 can be electrically connected to and disposed between the compensate control unit 40 and the lighting-emitting unit 30, working as a control for turning on/off the light-emitting unit 30, which can be in form of a trip switch, and the user can turn on/off the light-emitting unit 30 by hand. It also can be in form of a photo sensitive switch, which can turns on/off the light-emitting unit 30 automatically based on the brightness of the ambient light.

While we have shown and described various embodiments in accordance with the present invention, it should be clear to those skilled in the art that further embodiments may be made without departing from the scope of the present invention.

## Claims

1. A power storage and management system for a bicycle dynamo comprising:
a stabilized rectifier serving to stabilize and rectify voltage generated by a bicycle dynamo;
a compensate control unit electrically connected to the stabilized rectifier and able to detect value of the voltage after being stabilized and rectified by the stabilized rectifier;
a storage unit electrically connected to the compensate control unit and used to store electric energy after being stabilized and rectified by the stabilized rectifier;
a charging protective unit electrically connected to and arranged between the compensate control unit and the storage unit for preventing overcharge of the storage unit;
by such arrangements, when the compensate control unit detects the voltage after being stabilized and rectified by the stabilized rectifier is high enough to make the light-emitting unit generate light at a desired brightness, a surplus electric energy, via the charging protective unit, will be stored in the storage unit, and the compensate control unit will instruct the storage unit to supply electric energy for the light-emitting unit's use when detecting the voltage after being stabilized and rectified by the stabilized rectifier is not high enough to make the light-emitting unit generate light at a desired brightness.

2. The power storage and management system for a bicycle dynamo as claimed in claim 1, wherein the voltage after being stabilized and rectified by the stabilized rectifier can be provided for the light-emitting unit's use.

3. The power storage and management system for a bicycle dynamo as claimed in claim 2, wherein the light-emitting unit can be head light or rear light of a bicycle.

4. The power storage and management system for a bicycle dynamo as claimed in claim 1, wherein the storage unit can be electrically connected to an exterior power supply, such that the electric energy in the storage unit can be used directly.

5. The power storage and management system for a bicycle dynamo as claimed in claim 1, wherein the charging protective unit can be electrically connected to a potential transforming unit, so as to charge the storage unit via the exterior power supply.

6. The power storage and management system for a bicycle dynamo as claimed in claim 5, wherein the exterior power supply of the potential transforming unit refers to commercial power.

7. The power storage and management system for a bicycle dynamo as claimed in claim 1, wherein a state control unit can be electrically connected to and disposed between the compensate control unit and the lighting-emitting unit, working as a control for turning on/off the light-emitting unit

8. The power storage and management system for a bicycle dynamo as claimed in claim 7, wherein the state control unit can enable the user to turn on/off the light-emitting unit by hand.

9. The power storage and management system for a bicycle dynamo as claimed in claim 7, wherein the state control unit can turn on/off the light-emitting unit automatically based on brightness of the ambient light.
